# EUROPEAN PATENT APPLICATION

(11) **EP 4 651 568 A1**
(43) Date of publication of application: **19.11.2025**
(21) Application number: 24753586.7
(22) Date of filing: 06.02.2024
(51) Int. Cl.: H04W 48/18, H04W 48/16, H04W 8/02, H04W 84/10

(54) **METHOD AND DEVICE FOR SELECTING STANDALONE NON-PUBLIC NETWORK FOR LOCALIZED SERVICE IN WIRELESS COMMUNICATION SYSTEM**

(30) Priority: 06.02.2023 KR 20230015713
(71) Applicant: Samsung Electronics Co., Ltd., Suwon-si, Gyeonggi-do 16677 (KR)
(72) Inventor: GUPTA, Naman, Suwon-si Gyeonggi-do 16677 (KR); SUH, Dongeun, Suwon-si Gyeonggi-do 16677 (KR)
(74) Representative: Gulde & Partner
(86) International application number: PCT/KR2024/001696
(87) International publication number: WO 2024/167261

(57) **Abstract**

The present disclosure relates to a 5G or 6G communication system for supporting higher data transmission rates. A method performed by a terminal in a wireless communication system according to an embodiment of the present disclosure comprises the steps of: receiving steering of roaming (SoR) information from a network entity; selecting a first hosting network when an indicator indicating a connection to a hosting network is included in the SoR information; and transmitting a registration request message to the selected first hosting network, wherein the first hosting network is selected on the basis of at least one of slice information, included in the SoR information, about at least one hosting network or domain network name (DNN) information.

## Description

### [Technical Field]

The present technology relates to a method and device for selecting a standalone non-public network (SNPN) for a localized service in a wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

As described above, as mobile communication systems evolve to provide various services, a need arises for a method for effectively providing such services.

### [Detailed Description of the Invention]

### [Technical Problem]

The disclosure relates to a method and device for transmitting information necessary for a user equipment (UE) to select a standalone non-public network (SNPN) providing a localized service in a wireless communication system and operating based thereon.

### [Technical Solution]

According to an embodiment of the disclosure, a method of a UE in a wireless communication system comprises receiving steering of roaming SoR information from a network entity, in case that the SoR information includes an indication indicating a connection to a hosting network or in case that an input indicating determination of access to a localized service is received from a user, selecting a first hosting network, and transmitting a registration request message to the selected first hosting network. The first hosting network is selected based on at least one of domain network name DNN information or slice information on at least one hosting network included in the SoR information.

According to an embodiment of the disclosure, a UE in a wireless communication system, the UE comprises a transceiver, and at least one processor. The at least one processor is configured to receive steering of roaming SoR information from a network entity and, in case that the SoR information includes an indication indicating a connection to a hosting network, select a first hosting network, and transmit a registration request message to the selected first hosting network. The first hosting network is selected based on at least one of domain network name DNN information or slice information on at least one hosting network included in the SoR information.

### [Advantageous Effects]

According to the disclosure, the UE may select an appropriate SNPN using given information when desiring to use a specific service from a hosting network, enhancing service quality.

### [Brief Description of Drawings]

FIG. 1 is a view illustrating a local service provided by a hosting network according to an embodiment of the present invention;
FIG. 2 is a flowchart illustrating an operation of receiving SoR information related to a hosting network providing a localized service from a network according to an embodiment of the present invention;
FIG. 3 is a flowchart illustrating a state of a UE performing an operation for selecting a hosting network according to an embodiment of the present invention;
FIG. 4 illustrates operations of a UE according to an embodiment of the disclosure; and
FIG. 5 is a view illustrating a structure of a UE according to an embodiment of the disclosure.

### [Mode for Carrying out the Invention]

Hereinafter, the operational principle of the disclosure is described below with reference to the accompanying drawings. When determined to make the subject matter of the present invention unclear, the detailed description of known functions or configurations may be skipped. The terms as used herein are defined considering the functions in the present disclosure and may be replaced with other terms according to the intention or practice of the user or operator. Therefore, the terms should be defined based on the overall disclosure.

As used herein, each of such phrases as "A/B," "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order).

As used herein, terms for identifying access nodes, terms denoting network entities, terms denoting messages, terms denoting inter-network entity interfaces, and terms denoting various pieces of identification information are provided as an example for ease of description. Thus, the disclosure is not limited by the terms, and such terms may be replaced with other terms denoting objects with equivalent technical concept.

Hereinafter, the base station may be an entity allocating resource to terminal and may be at least one of gNode B, eNode B, Node B, base station (BS), wireless access unit, base station controller, or node over network. The terminal may include UE (user equipment), MS (mobile station), cellular phone, smartphone, computer, or multimedia system capable of performing communication functions. In the disclosure, downlink (DL) refers to a wireless transmission path of signal transmitted from the base station to the terminal, and uplink (UL) refers to a wireless transmission path of signal transmitted from the terminal to the base station. Although LTE or LTE-A systems may be described below as an example, the embodiments may be applied to other communication systems having a similar technical background or channel pattern. For example, 5G mobile communication technology (5G, new radio, NR) developed after LTE-A may be included in systems to which embodiments of the disclosure are applicable, and 5G below may be a concept including legacy LTE, LTE-A and other similar services.

Further, the embodiments may be modified in such a range as not to significantly depart from the scope of the present invention under the determination by one of ordinary skill in the art and such modifications may be applicable to other communication systems. It should be appreciated that the blocks in each flowchart and combinations of the flowcharts may be performed by computer program instructions.

Since the computer program instructions may be equipped in a processor of a general-use computer, a special-use computer or other programmable data processing devices, the instructions executed through a processor of a computer or other programmable data processing devices generate means for performing the functions described in connection with a block(s) of each flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction means for performing the functions described in connection with a block(s) in each flowchart. Since the computer program instructions may be equipped in a computer or other programmable data processing devices, instructions that generate a process executed by a computer as a series of operational steps are performed over the computer or other programmable data processing devices and operate the computer or other programmable data processing devices may provide steps for executing the functions described in connection with a block(s) in each flowchart.

Further, each block may represent a module, segment, or part of a code including one or more executable instructions for executing a specified logical function(s). Further, it should also be noted that in some replacement embodiments, the functions mentioned in the blocks may occur in different orders. For example, two blocks that are consecutively shown may be performed substantially simultaneously or in a reverse order depending on corresponding functions. As used herein, the term "unit" means a software element or a hardware element such as a field-programmable gate array (FPGA) or an application specific integrated circuit (ASIC). A unit may play a certain role. However, 'unit' is not limited to software or hardware. A 'unit' may be configured in a storage medium that may be addressed or may be configured to execute one or more processors. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, the components and 'units' may be implemented to execute one or more CPUs in a device or secure multimedia card. According to embodiments, a "...unit" may include one or more processors.

For ease of description, the terms and names defined in the 3rd generation partnership project 5G and new radio (NR) standards among the current communication standards are used herein. However, the disclosure is not limited by such terms and names and may be likewise applicable to wireless communication networks conforming to other standards.

The terms used in the disclosure are described below.

"Public land mobile network (PLMN)" refers to a network deployed and operated by a mobile network operator. Each mobile network operator operates one or more PLMNs. Each PLMN may be identified by a mobile country code (MCC) and a mobile network code (MNC). The PLMN information about the cell is included and broadcast in the system information. In PLMN selection, cell selection, and cell reselection, various types of PLMNs may be considered by the UE.

"Home PLMN (HPLMN)" refers to a PLMN having an MCC and an MNC matching the MCC and the MNC of the UE IMSI.

"Localized service" is a service provided in a specific or limited area and/or a service that may have a time limit. The service may be in the form of an application (e.g., an electronic game, audio/video on demand, etc.) or simply a connection form (a better quality of service (QoS) may be provided from the UE to the data network).

"Localized service provider (LSP)" refers to a network operator or a special service provider associated with the hosting network (e.g., a streaming service in which the hosting network provides access to a special domain network (DNN) for a specific streaming service), as a provider of a localized service.

"Hosting network" is a network that provides access to a local service, usually a stand-alone non-public network (SNPN). The hosting network may be used to provide a home network service to the UE. Alternatively, the hosting network is a public network integrated-NPN (PNI-NPN), which, unlike the SNPN, may use all or some of the functions provided by the PLMN of the serving network.

"Roaming operation" refers to a procedure that allows the UE to provide information about the preferred network to be selected by the home network or credential holder.

"PLMN access mode" refers to a mode in which the UE attempts to search and select a PLMN for use based on the PLMN prioritized list stored in the UE and register it.

"Steering of roaming (SoR)" is a procedure in which the operator (home network) allows the roaming UE to connect to the corresponding hosting network. In this case, the operator may notify the UE of a preferred PLMN list. In this procedure, parameters such as the UE's current location and QoS for the UE currently in the roaming network are required so that the home network may make an SoR decision.

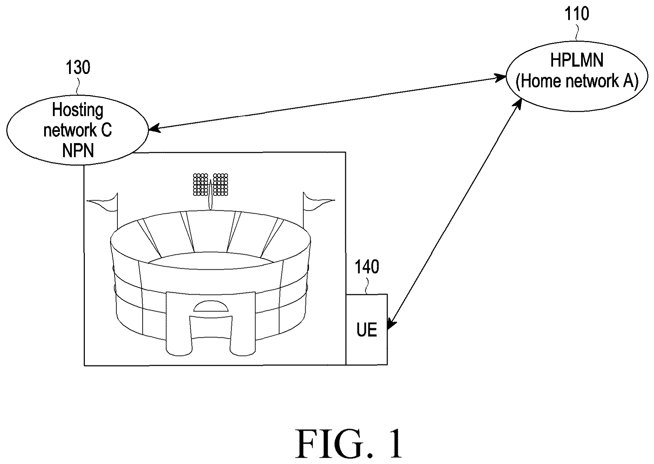

FIG. 1 is a view illustrating a local service provided by a hosting network according to an embodiment of the present invention.

Referring to FIG. 1, hosting network C 130 different from network A 110, which is the home public land mobile network (HPLMN) of the UE 140, may provide UE 140 with access to a local service.

For example, if there is an event in which hosting network C 130 has good service quality in a highly congested stadium, the UE 140 (or user) may want to use a specific service from hosting network C 130.

Alternatively, when home network A 110 enters into a service contract with hosting network C 130 to provide the UE 140's access to a specific service, some UEs 140 receiving the service may be steered to a specific hosting network C 130 to access a specialized local service or a service of better quality.

For the purpose of selecting a hosting network C (130 (i.e., SNPN) that provides a localized service, the UE needs to be provided with information about the validity conditions (e.g., time and location) for the SNPN so that it may be considered while selecting the SNPN.

Further, the UE's SNPN selection requires the UE to start SNPN selection according to when and where a specific SNPN providing the localized service desired by the user is available, in addition to starting it when the UE is switched after recovery from coverage shortage, when the UE starts operating in SNPN access mode, or when the user is able to start reselection of the SNPN.

Further, it is necessary to specify an operation in which the home network switches UEs, selects a specific hosting network, and registers it.

Accordingly, the disclosure proposes an extension of the configuration information about the UE subscription data.

For the purpose of helping the UE select and access a specific hosting network to use the desired localized service, the following information may be selectively added for each SNPN/GIN of UE subscription data stored in the UE.
1. Time validity: indicates, e.g., the time when a specific localized service is available.
2. Location validity: indicates an area where the user may connect to an SNPN that provides a specific localized service or start a search.
3. Slice information: A list of single-network slices supported by SNPNs
4. DNN information: A list of DNNs supported by SNPNs

Since the slice and DNN information is useful in a scenario where the UE wants to temporarily move to the hosting network by the subscribed SNPN, the UE may attempt to select an SNPN that provides the UE's registered NSSAI.

Information including the following additional list may be configured in the UE for the purpose of selecting the hosting network. This may be referred to as hosting network selection information.
1. A user defined prioritized list of hosting networks
   In an embodiment, it may include the validity condition defined in the UE subscription data. In an embodiment, it should have a higher priority than the list provided by the credential holder.
2. A credential holder provided prioritized list of hosting networks
   In an embodiment, it may include the validity condition defined in the UE subscription data.
3. The current credential holder controlled prioritized list of SNPN/GIN may include additional information described in the UE subscription data.
4. Timer information for regularly identifying the validity conditions and starting hosting network selection
   The credential holder provided prioritized list of hosting network and the current credential holder controlled prioritized list of SNPN/GIN may be alternative options according to the implementation.

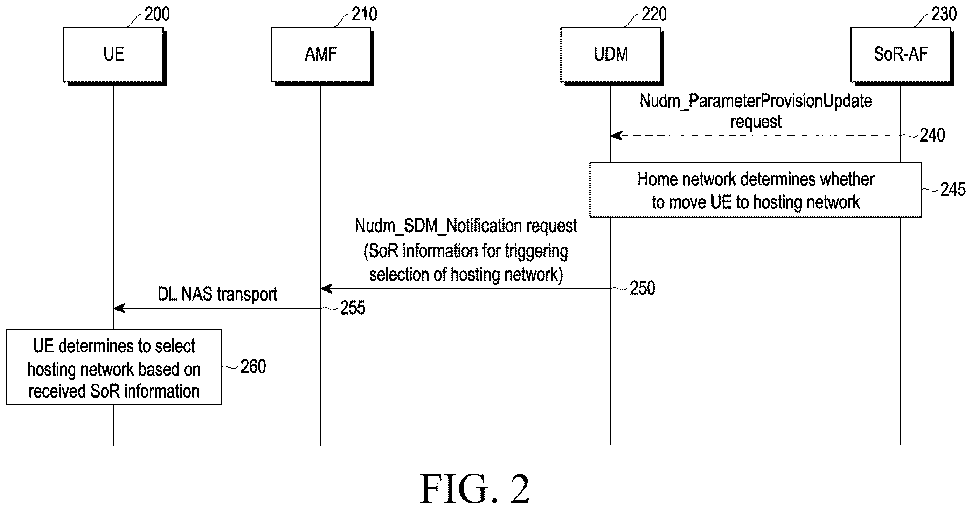

The stored list may be updated by the home network or the credential holder using the roaming steering procedure described below in FIG. 2.

In an embodiment, when the UE performs hosting network selection (i.e., when performing SNPN selection for the purpose of using the localized service), the UE may consider the localized service in the mode in which the UE operates. In other words, in this mode, the UE may select an SNPN providing the localized service.

In selecting the localized service, the following two scenarios may be considered.

Scenario 1: when the UE or the user uses a specific localized service and selects a corresponding hosting network accordingly
when the UE is already registered in the home network is considered. In other words, if the UE or the user expresses the intention to use the localized service, the UE may regularly start identifying whether the validity condition of the SNPN or GIN in the prioritized list is met. In an embodiment, timer information (i.e., the frequency at which the UE performs the inspection) for the periodic inspection may be preconfigured in the UE or may be provided to the UE by the home network (through roaming steering).

In an embodiment, when the validity condition is met, the UE may switch to the localized service mode and initiate performing hosting network selection to use the localized service. In an embodiment, when the UE determines to access the localized service, the user or the UE may also switch to the localized service mode to directly initiate the selection of the hosting network. In an embodiment, in order to select a specific SNPN and determine priorities between different SNPNs, the UE may consider a list configured in the UE for hosting network selection (as described above).

Scenario 2: when the home network switches the UE to the hosting network

The home network (which may be a PLMN or SNPN) or the UE's credential holder may determine to switch the UE to a specific hosting network. This may occur when the subscriber to the home network wants to use a specific localized service of the hosting network. The specific scenario is a case in which the hosting network and the home network have a pre-contract relationship. In an embodiment, when the user enters the application range of the hosting network, the home network attempts to switch the subscribed UE to a specific network. In an embodiment, the home network may consider the congestion and load of the network to determine that only a specific UE connects to the hosting network.

In an embodiment, the steering of roaming (SoR) information stored in the UDM may include the following information:
1. The prioritized list of hosting networks (i.e., SNPNs used to provide the localized service); includes at least one of the following information related to each SNPN.
   a. Time validity
   b. Location validity
   c. Slice information (S-NSSAI list)
   d. DNN information
   e. Localized service information
2. Indication to connect to hosting networks: This indication may trigger the UE to start identifying whether the SNPN providing the localized service is available.
3. Timer Information: A timer when the UE regularly identifies validation conditions to initiate a hosting network search for the localized service.

The slice and DNN information may be used by the UE to select a specific SNPN in addition to time and locational validity criteria. For example, if the UE supports the currently registered S-NSSAI or DNN, a specific SNPN may be selected to determine that the UE may obtain the desired service from the hosting network.

FIG. 2 is a flowchart illustrating an operation of receiving SoR information related to a hosting network providing a localized service from a network according to an embodiment of the present invention.

FIG. 2 illustrates operations between an access and mobility management function 210, a unified data management 220, and an SoR-application function (AF) 230. The SoR-AF 230 may be replaced with a third (3rd) party AF that may negotiate with the UDM and the home network.

Referring to FIG. 2, in step 240, the SoR-AF 230 may transmit a Nudm_ParameterProvisionUpdate request to the UDN 220. In other words, the SoR-AF 230 may update the UE subscription data stored in the UDM 220 with new SoR information necessary for selecting the hosting network.

In step 245, the home network may determine to switch the UE to the hosting network.

In step 250, the UDM 220 may transmit a Nudm_SDM_Notification request to the AMF 210. The Nudm_SDM_Notification may include SoR information for triggering the selection of the hosting network. The step 255 AMF 210 may transmit an NAS downlink message to the UE 220. The NAS downlink message may include SoR information received from the UDM.

In step 260, the UE 220 may determine a selection of the hosting network based on the received SoR information. In other words, when the SoR information received by the UE includes a trigger for selecting the hosting network, the UE may identify whether the validity condition for either the SPN or GIN in the list configured for the hosting network selection is met. If the validity condition is met, the UE may start a search for available networks and select the hosting network with the highest priority.

In an embodiment, when the UE already receives SoR information in the localized service mode and selects the hosting network, the UE may determine to select again (or reselect) the hosting network to select a higher-priority network providing the localized service.

Table 1 below illustrates the hosting network selection information in a table format. This information is configured in the UE, and may be included in the SoR information and provided by the SoR procedure. The UDM may also store the information in the UE's UDM subscription data. The information included in Table 1 is optional and may be added or omitted according to UE capability or deployment scenario.

**[Table 1]**

| Credential holder provided prioritized list of Hosting networks for localized services | |
|---|---|
| | SNPN ID |
| | Location validity information |
| | Time validity information |
| | Slice information |
| | DNN information |

| Credential Holder provided prioritized list of GINs for localized services | |
|---|---|
| | GIN |
| | Location validity information |
| | Time validity information |
| | Slice information |
| | DNN information |

| Timer information (timers related to how often should check validity condition and start searching for Hosting networks | |
|---|---|
| Indication from Credential Holder to enable access to localized services | |

The UE may use the following priority order between different SNPNs to select a network providing a localized service. Alternatively, when there is no SNPN providing a localized service, the UE may use a general SNPN.
1. The SNPN in the user defined list of SNPNs in the user defined list of hosting networks: The UE may consider only the SNPN that meets the validity condition.
2. The SNPN in the credential holder controlled prioritized list of hosting networks: The UE may consider only the SNPN that meets the validity condition.
3. SNPNs that broadcast the GIN, which are present in the CH controlled prioritized list of GINs for localized services; The UE may consider only GINs whose validity condition is met.
4. Subscribed SNPN
5. Other SNPNs configured in the UE without providing the localized service.

In an embodiment, when the UE wants to connect to the hosting network, the UE may know whether to perform a search for available networks by utilizing the stored validity information. In other words, when the UE is present in an area where none of the hosting networks configured therein meet the validity condition by first identifying the validity information stored in the configuration information, the UE may prevent battery consumption for searching for an available network to select the hosting network providing the localized service.

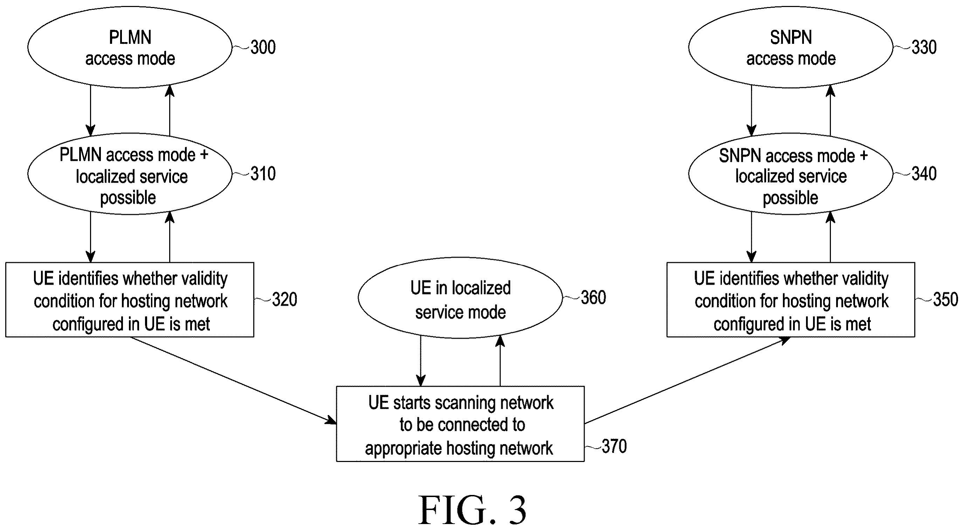

FIG. 3 is a flowchart illustrating a state of a UE performing an operation for selecting a hosting network according to an embodiment of the present invention.

FIG. 3 illustrates the overall procedure for a method and time for changing the access mode and a method by which the UE is triggered to search for the network in a corresponding area to select a specific hosting network.

In step 300, the UE may be in the PLMN access mode. Then, when the UE receives updated SoR information including an indication indicating that the UE connects to the hosting network or when the user determines to access the localized service (i.e., when the UE receives an input indicating the determination to access the localized service from the user), in step 310, the UE may transition to the PLMN access mode capable of localized service.

Thereafter, when the timer for regularly identifying the validity condition configured in the hosting network selection information included in the SoR information expires, in step 320, the UE may identify whether the validity condition for the hosting network configured in the UE has been met.

Thereafter, if the validity condition for any SNPN or GIN present in the hosting network selection information is met, the UE may scan the available network in step 370. When the UE selects the SNPN with the highest priority, the UE may move to the SNPN and enter the localized service mode.

In an embodiment, if the validity information is not met in step 320, the UE may return to step 310 and maintain the PLMN access mode capable of localized service.

In step 330, the UE may be in the SNPN access mode. Thereafter, when the UE receives updated SoR information including the indication indicating that the UE connects to the hosting network or when the user determines to access the localized service, in step 340, the UE may transition to the SNPN access mode capable of localized service.

Thereafter, when the timer for regularly identifying the validity condition configured in the hosting network selection information included in the SoR information expires, in step 350, the UE may identify whether the validity condition for the hosting network configured in the UE has been met.

Thereafter, if the validity condition for any SNPN or GIN present in the hosting network selection information is met, the UE may scan the available network in step 370. When the UE selects the SNPN with the highest priority, the UE may move to the SNPN and enter the localized service mode.

In an embodiment, if the validity information is not met in step 350, the UE may return to step 340 and maintain the PLMN access mode capable of localized service.

In an embodiment, in step 360, the UE may be in the localized service mode. If the UE receives updated SoR information including the indication indicating that the UE connects to the hosting network (and when selecting a higher-priority hosting network), or when the UE regularly performs the inspection based on the timer information configured in the UE so that the validity condition of the hosting network with a higher priority than the currently selected hosting network is met, the UE may scan the available hosting network in step 370. When the UE selects the SNPN with the highest priority, the UE may move to the SNPN and enter the localized service mode.

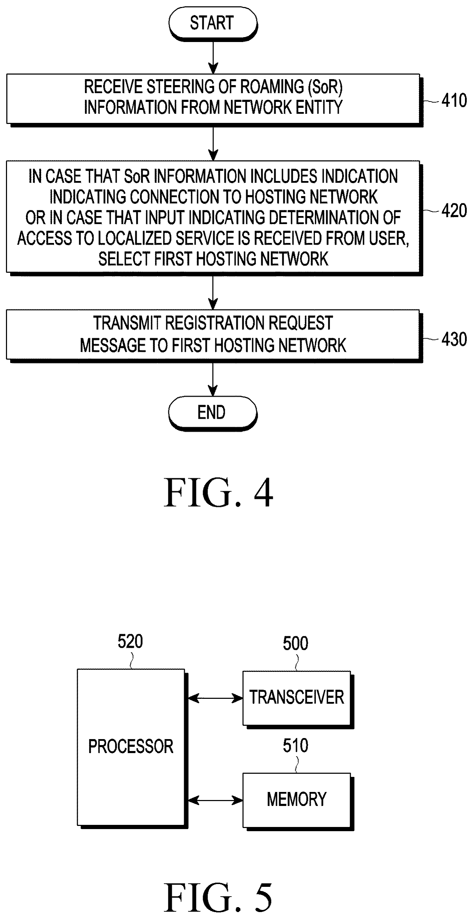

FIG. 4 illustrates operations of a UE according to an embodiment of the disclosure.

In step 410, the UE may receive steering of roaming SoR information from a network entity.

In step 420, when the SoR information includes an indication indicating a connection to a hosting network or when receiving an input indicating determination of access to a localized service from a user, the UE may select a first hosting network.

In step 430, the UE may transmit a registration request message to the selected first hosting network. In an embodiment, the first hosting network may be selected based on at least one of domain network name (DNN) information or slice information about at least one hosting network included in the SoR information.

In an embodiment, to select the first hosting network, the UE may determine whether a validity condition configured in the UE for the at least one hosting network is met and, when the validity condition is met, scan an available network and selecting the first hosting network from among the at least one hosting network. In an embodiment, to select the first hosting network, the UE may determine whether the validity condition for the hosting network configured in the UE for the hosting network and, when a timer for identifying the validity condition expires, determine whether the validity condition configured in the UE for the hosting network is met. In an embodiment, the information related to the timer may be included in the SoR information or is preset in the UE.

In an embodiment, the first hosting network may be selected based on a credential holder controlled prioritized list of standalone non-public networks (SNPNs)/group identities for network selection (GINs) included in the SoR information.

In an embodiment, the first hosting network may be selected considering at least one list according to a preset priority. The at least one list may include at least one of a user defined list of standalone non-public networks SNPNs in a user defined list of housing networks, a credential holder controlled prioritized list of hosting networks, a credential holder controlled prioritized list of a group identity for network selection GIN for the localized service, a list of subscribed SNPNs, and a list of other SNPNs configured in the UE without providing the localized service.

In an embodiment, the UE may be in one of a public land mobile network (PLMN) mode, a standalone non-public network (SNPN) mode, or a localized service mode. In an embodiment, the UE may be in a public land mobile network (PLMN) mode, the network entity is one of a steering of a roaming-application function (SoR-AF), a third party application function (AF), or a unified data management (UDM) included in a home network. In an embodiment, when the UE is in a localized service mode, the first hosting network may have a higher priority than a hosting network to which the UE is currently connected.

FIG. 5 is a view illustrating a structure of a UE according to an embodiment of the disclosure.

In FIG. 5, the UE may include a transceiver 500, memory 510, and a processor 520. The processor 520, transceiver 500, and memory 510 of the UE of FIG. 7 may be operated according to the method(s) described above in connection with FIGS. 1 to 4. However, the components of the UE are not limited thereto. For example, the UE may include more or fewer components than the above-described components. The processor 520, the transceiver 500, and the memory 510 may be implemented in the form of at least one chip.

The transceiver 500 collectively refers to a receiver and a transmitter and may transmit and receive signals to/from a UE or another network entity. The transmitted/received signals may include at least one of control information and data. To that end, the transceiver 500 may include an RF transmitter for frequency-up converting and amplifying signals transmitted and an RF receiver for low-noise amplifying signals received and frequency-down converting the frequency of the received signals. This is merely an embodiment of the transceiver 500, and the components of the transceiver 500 are not limited to the RF transmitter and the RF receiver. Further, the transceiver 500 may receive signals through a communication scheme defined in the 3GPP standard, output the signals to the processor 520, and transmit the signals output from the processor 520. Further, the transceiver 500 may receive the signal and output it to the processor 520 and transmit the signal output from the processor 520 to another network entity through the network.

The memory 510 may store programs and data necessary for the operation of the UE according to at least one of the embodiments of FIGS. 1 to 4. The memory 510 may store control information and/or data that is included in the signal obtained by the UE. The memory 510 may include a storage medium, such as ROM, RAM, hard disk, CD-ROM, and DVD, or a combination of storage media.

The processor 520 may control a series of processes so that the UE may operate according to at least one of the embodiments of FIGS. 1 to 4. The processor 520 may include at least one processor.

The at least one processor may receive steering of roaming SoR information from a network entity.

When the SoR information includes an indication indicating a connection to a hosting network or when receiving an input indicating determination of access to a localized service from a user, the at least one processor may select a first hosting network.

The at least one processor may transmit a registration request message to the selected first hosting network. In an embodiment, the first hosting network may be selected based on at least one of domain network name (DNN) information or slice information about at least one hosting network included in the SoR information.

In an embodiment, the at least one processor may determine whether a validity condition configured in the UE for the at least one hosting network is met and, when the validity condition is met, scan an available network and selecting the first hosting network from among the at least one hosting network. In an embodiment, the at least one processor may determine whether the validity condition for the hosting network configured in the UE for the hosting network and, when a timer for identifying the validity condition expires, determine whether the validity condition configured in the UE for the hosting network is met. In an embodiment, the information related to the timer may be included in the SoR information or is preset in the UE.

In an embodiment, the first hosting network may be selected based on a credential holder controlled prioritized list of standalone non-public networks (SNPNs)/group identities for network selection (GINs) included in the SoR information.

In an embodiment, the first hosting network may be selected considering at least one list according to a preset priority. The at least one list may include at least one of a user defined list of standalone non-public networks SNPNs in a user defined list of housing networks, a credential holder controlled prioritized list of hosting networks, a credential holder controlled prioritized list of a group identity for network selection GIN for the localized service, a list of subscription SNPNs, and a list of other SNPNs configured in the UE without providing the localized service.

In an embodiment, the UE may be in one of a public land mobile network (PLMN) mode, a standalone non-public network (SNPN) mode, or a localized service mode. In an embodiment, the UE may be in a public land mobile network (PLMN) mode, the network entity is one of a steering of a roaming-application function (SoR-AF), a third party application function (AF), or a unified data management (UDM) included in a home network. In an embodiment, when the UE is in a localized service mode, the first hosting network may have a higher priority than a hosting network to which the UE is currently connected.

It should be noted that the above-described configuration views, example views of control/data signal transmission methods, example views of operational procedures, and configuration views are not intended as limiting the scope of the disclosure. In other words, all the components, entities, or operational steps described in connection with the embodiments should not be construed as essential components to practice the present invention, and the present invention may be rather implemented with only some of the components without departing from the gist of the present invention. The embodiments may be practiced in combination, as necessary. For example, some of the methods proposed herein may be combined to operate the network entity and the UE.

The above-described operations of the base station or UE may be realized by equipping a memory device retaining their corresponding codes in the base station device or any component of the UE. That is, the controller in the eNB or terminal may execute the above-described operations by reading and executing the program codes stored in the memory device by a processor or central processing unit (CPU).

As described herein, various components or modules in the entity, base station or UE may be operated using a hardware circuit, e.g., a complementary metal oxide semiconductor-based logic circuit, firmware, software, and/or using a hardware circuit such as a combination of hardware, firmware, and/or software embedded in a machine-readable medium. As an example, various electric structures and methods may be executed using electric circuits such as transistors, logic gates, or ASICs.

When implemented in software, there may be provided a computer readable storage medium storing one or more programs (software modules). One or more programs stored in the computer readable storage medium are configured to be executed by one or more processors in an electronic device. One or more programs include instructions that enable the electronic device to execute methods according to the embodiments described in the specification or claims of the disclosure.

The programs (software modules or software) may be stored in random access memories, non-volatile memories including flash memories, read-only memories (ROMs), electrically erasable programmable read-only memories (EEPROMs), magnetic disc storage devices, compact-disc ROMs, digital versatile discs (DVDs), or other types of optical storage devices, or magnetic cassettes. Alternatively, the programs may be stored in memory constituted of a combination of all or some thereof. As each constituting memory, multiple ones may be included.

The programs may be stored in attachable storage devices that may be accessed via a communication network, such as the Internet, Intranet, local area network (LAN), wide area network (WLAN), or storage area network (SAN) or a communication network configured of a combination thereof. The storage device may connect to the device that performs embodiments of the disclosure via an external port. A separate storage device over the communication network may be connected to the device that performs embodiments of the disclosure.

In the above-described specific embodiments, the components included in the disclosure are represented in singular or plural forms depending on specific embodiments proposed. However, the singular or plural forms are selected to be adequate for contexts suggested for ease of description, and the disclosure is not limited to singular or plural components. As used herein, the singular forms "a," "an," and "the" are intended to include the plural forms as well, unless the context clearly indicates otherwise.

Although specific embodiments of the present invention have been described above, various changes may be made thereto without departing from the scope of the present invention. Thus, the scope of the disclosure should not be limited to the above-described embodiments, and should rather be defined by the following claims and equivalents thereof. In other words, it is apparent to one of ordinary skill in the art that various changes may be made thereto without departing from the scope of the present invention. Further, the embodiments may be practiced in combination. For example, some of the methods proposed herein may be combined to operate the base station and the UE. Although the embodiments are proposed in association with 5G and NR systems, various modifications thereto may apply to other various systems, such as LTE, LTE-A, LTE-A-Pro systems.

Although specific embodiments of the present invention have been described above, various changes may be made thereto without departing from the scope of the present invention. Thus, the scope of the disclosure should not be limited to the above-described embodiments, and should rather be defined by the following claims and equivalents thereof.

## Claims

1. A method of a user equipment (UE) in a wireless communication system, the method comprising:
receiving, from a network entity, steering of roaming (SoR) information;
in case that the SoR information includes an indication indicating a connection to a hosting network or in case that an input indicating determination of access to a localized service is received from a user, selecting a first hosting network; and
transmitting, to the selected first hosting network, a registration request message,
wherein the first hosting network is selected based on at least one of domain network name (DNN) information or slice information on at least one hosting network included in the SoR information.

2. The method of claim 1, wherein selecting the first hosting network includes:
determining whether a validity condition configured in the UE for at least one hosting network is met; and
in case that the validity condition is met, scanning an available network and selecting the first hosting network from among the at least one hosting network, and
wherein the validity condition is related to at least one of a time validity or a location validity of a hosting network.

3. The method of claim 2, wherein determining whether the validity condition configured in the UE for a hosting network includes,
in case that a timer for identifying the validity condition expires, determining whether the validity condition configured in the UE for the hosting network is met, and
wherein information related to the timer is included in the SoR information or is preset in the UE.

4. The method of claim 1, wherein the first hosting network is selected considering at least one list according to a preset priority, wherein the at least one list includes at least one of:
a user defined list of standalone non-public networks (SNPNs) in a user defined list of hosting networks;
a credential holder controlled prioritized list of hosting networks;
a credential holder controlled prioritized list of a group identity for network selection (GIN) for the localized service;
a list of subscribed SNPNs; and
a list of other SNPNs configured in the UE without providing the localized service.

5. The method of claim 1, wherein the UE is in one of a public land mobile network (PLMN) mode, a standalone non-public network (SNPN) mode, or a localized service mode.

6. The method of claim 1, wherein in case that the UE is in a public land mobile network (PLMN) mode, the network entity is one of a steering of a roaming-application function (SoR-AF), a third party application function (AF), or a unified data management (UDM) included in a home network.

7. The method of claim 1, wherein in case that the UE is in a localized service mode, the first hosting network has a higher priority than a hosting network to which the UE is currently connected.

8. A user equipment (UE) in a wireless communication system, the UE comprising:
a transceiver; and
at least one processor, wherein the at least one processor is configured to:
receive, from a network entity, steering of roaming (SoR) information;
in case that the SoR information includes an indication indicating a connection to a hosting network, select a first hosting network; and
transmit, to the selected first hosting network, a registration request message, and
wherein the first hosting network is selected based on at least one of domain network name (DNN) information or slice information on at least one hosting network included in the SoR information.

9. The UE of claim 8, wherein the at least one processor is configured to:
determine whether a validity condition configured in the UE for at least one hosting network is met; and
in case that the validity condition is met, select a first hosting network from among the at least one hosting network, and
wherein the validity condition is related to at least one of a time validity or a location validity of a hosting network.

10. The UE of claim 9, wherein the at least one processor is configured to, in case that a timer for identifying the validity condition expires, determine whether the validity condition configured in the UE for the hosting network is met, and
wherein information related to the timer is included in the SoR information.

11. The UE of claim 8, wherein the first hosting network is selected considering at least one list according to a preset priority, wherein the at least one list includes at least one of:
a user defined list of standalone non-public networks (SNPNs) in a user defined list of hosting networks;
a credential holder controlled prioritized list of the hosting network;
a credential holder controlled prioritized list of a group identity for network selection (GIN) for the localized service;
a list of subscribed SNPNs; and
a list of other SNPNs configured in the UE without providing the localized service.

12. The UE of claim 8, wherein the UE is in one of a public land mobile network (PLMN) mode, a standalone non-public network (SNPN) mode, or a localized service mode.

13. The UE of claim 8, wherein in case that the UE is in a public land mobile network (PLMN) mode, the network entity is one of a steering of a roaming-application function (SoR-AF), a third party application function (AF), or a unified data management (UDM) included in a home network.

14. The UE of claim 8, wherein in case that the UE is in a localized service mode, the first hosting network has a higher priority than a hosting network to which the UE is currently connected.
